(19)

Europäisches
Patentamt
European
Patent Office
Office européen
des brevets

(11) **EP 2 388 722 A2**

(12) **EUROPEAN PATENT APPLICATION**

(43) Date of publication:
**23.11.2011 Bulletin 2011/47**

(51) Int Cl.:
***G06F 17/50*** *(2006.01)*

(21) Application number: **11165644.3**

(22) Date of filing: **11.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.05.2010 US 781877**

(71) Applicant: **Livermore Software Technology
Corporation
Livermore CA 94551 (US)**

(72) Inventor: **Olsson, Tobias
Livermore, CA 94551 (US)**

(74) Representative: **Becker Kurig Straus
Patentanwälte
Bavariastrasse 7
80336 München (DE)**

(54) **Numerical model for simulating polymeric material properties**

(57) Methods and systems using a numerical model to describe polymeric material properties are disclosed. FEM model of a product is defined. FEM model includes one or more solid elements of polymeric material. In a time-marching simulation of the product under loads, stress state of the solid elements is calculated from deformation gradient tensors. Stress state incorporates the Mullins effect and strain hardening effect, also includes elastic stress, viscoelastic stress and back stress. A yield surface is defined to determine whether the elements are under plastic deformation. Plastic strain is obtained to update the deformation gradient tensor, which is then used to recalculate the stress state. Calculations continue until updated stress state is within a tolerance of the yield surface, at which time the results of polymeric material elements are obtained. The numerical model takes into account all characteristics of a polymeric material.

**FIG. 2**

**Description**

**FIELD OF THE INVENTION**

The present invention generally relates to computer-aided mechanical engineering analysis, more particularly to methods and systems for performing simulation of polymeric materials under deformation including viscoelastic, viscoplastic and non-linear softening.

**BACKGROUND OF THE INVENTION**

Products made of polymeric material are being used almost everywhere in the daily life. Unlike polycrystalline materials (e.g., metals), in which the molecules are arranged in orderly lattice structures, the polymeric material, such as plastics, synthetic rubbers, polystyrene, silicones, etc., are composed of long chain of monomer molecules intertwined in random orientations. The mechanical properties of polymeric material are significantly different from those of the lattice-structured material when subjecting to mechanical loads.

When dealing with the polycrystalline materials analyses, because of their relatively uniform molecular structures, the deformation of material can be described with Hooke's Law, where displacement, or strain, is proportional to the load, or stress. Even when permanent deformation takes place, the flow of material can be described by well-developed plasticity theory and be accurately predicted. Analysis of polymeric material, however, is much more complicate because of its long-chain polymer structure. In order to design product made of polymeric materials, engineers have been using computer model (numerical model) simulate the properties of the polymeric materials, for example, finite element analysis (FEA) or finite element method (FEM). FEM facilitates the simulation of complex problems, the efficiency of the computation and the accuracy of prediction of the response are largely dependent on how the material under investigation is modeled. A well-established material model could produce accurate results with less computation resources. However, none of the existing material models are capable of completely describing all the unique properties of a polymeric material under large, or nonlinear, deformation. Without such a material model, the numerical simulations will not be efficient or accurate.

Therefore, it would be desirable to have a method and system which include a material model that can be used for accurately predicting the response of polymeric material under large nonlinear deformations.

**SUMMARY OF THE INVENTION**

This section is for the purpose of summarizing some aspects of the present invention and to briefly introduce some preferred embodiments. Simplifications or omissions in this section as well as in the abstract and the title herein may be made to avoid obscuring the purpose of the section. Such simplifications or omissions are not intended to limit the scope of the present invention.

In general the present invention pertains to methods and systems using a numerical model to describe polymeric material properties in a computational environment (e.g., in a finite element analysis module). According to one aspect of the present invention, a FEM model of a product is defined. The FEM model includes one or more solid elements of polymeric material. In a time-marching simulation of the product under loads, stress state of the solid elements is calculated from deformation gradient tensors. Stress state incorporates the Mullins effect and strain hardening effect, also includes elastic stress, viscoelastic stress and back stress. A yield surface is defined to determine whether the elements are under plastic deformation. Plastic strain is obtained to update the deformation gradient tensor, which is then used to recalculate the stress state. The calculation iteration continues until the updated stress state is within a tolerance of the yield surface, at which time the response results of the polymeric material elements are obtained. The numerical model, according to one embodiment of the present invention, takes into account all characteristics of a polymeric material.

Other objects, features, and advantages of the present invention will become apparent upon examining the following detailed description of an embodiment thereof, taken in conjunction with the attached drawings.

**BRIEF DESCRIPTION OF THE DRAWINGS**

These and other features, aspects, and advantages of the present invention will be better understood with regard to the following description, appended claims, and accompanying drawings as follows:

FIGS. 1A and 1B are diagrams showing stress-strain relationship of an exemplary viscoelastic material under constant stress and under constant strain respectively;

FIG. 2 is a diagram showing an exemplary softening, or Mullins, effect of polymeric material;

FIG. 3 is a diagram showing a stress-strain relationship of an exemplary strain hardening effect;

FIG. 4 is a diagram showing deformation of a body illustrated in elastic and plastic deformation gradients;

FIGS 5A-5B are flowcharts showing a numerical process of simulating polymeric material according to an aspect of the invention; and

FIG. 6 is a functional diagramming depicting salient components of a computer used for implementing the invention.

## DETAILED DESCRIPTION

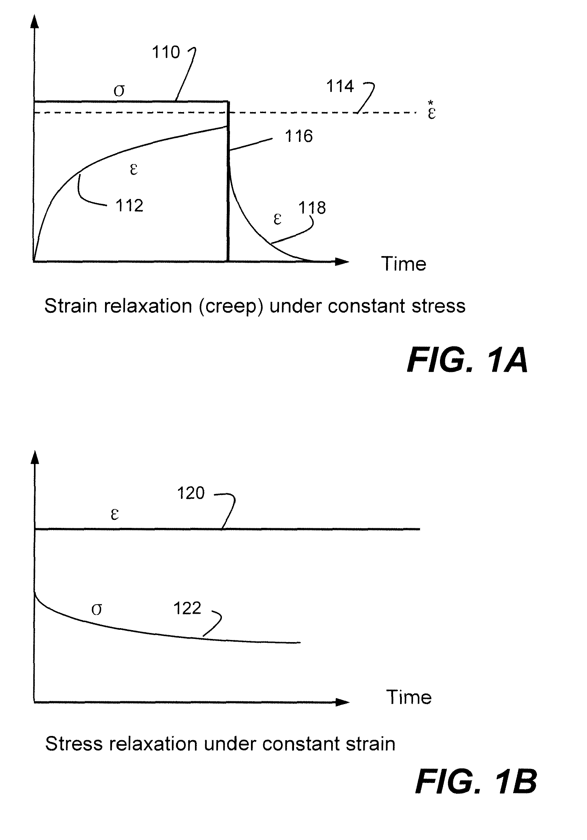

Stress and strain relaxations take place when the material is subjected to external loads. FIGS. 1A and 1B show schematically such relaxation behaviors. In FIG. 1A, under an applied constant stress 110, the strain increases following a path 112 asymptotically approaching a steady-state strain of $\varepsilon^*$ 114. When the applied stress is removed at 116, the strain reacts by following a decaying path 118 to its original value. In FIG. 1B, under an applied constant strain 120, the stress follows a decaying path 122 to a steady-state value. Such relaxation behaviors are commonly modeled by introducing viscous elements to a normal elastic model. Viscoelastic models such as Maxwell model and Voigt model have been proposed to simulate the behaviors of a polymeric material under mechanical loads. However, the Maxwell model may accurately describe the stress decaying with time, FIG. 1B, but fails to accurately predict creep response when material is under the constant stress. The Voigt model, on the other hand, may describe the creep behavior as shown in FIG 1A, but failed to accurately describe the stress relaxation behavior when material is under constant strain. Other models, such as generalized Maxell model, have been proposed to handle both the stress and the strain relaxations in linear viscoelasticity.

Another property of polymeric material is that the stress-strain response strongly depends on the maximum loading the material previously encountered. The polymeric material behaves like a normal elastic material initially, but when the material is subsequently subjected to a higher load, the stress-strain curve follows a significantly softer path. The stress-strain response stabilizes if subsequent loadings are below the previous maximum loading, and the response just retraces the path of the stabilized stress-strain curve. If the loading exceeds the previous maximum loading again, the stress-strain response changes to yet another even softer path. This softening effect is depending on the maximum loading the polymeric material has experienced and is also referred to as the Mullins effect.

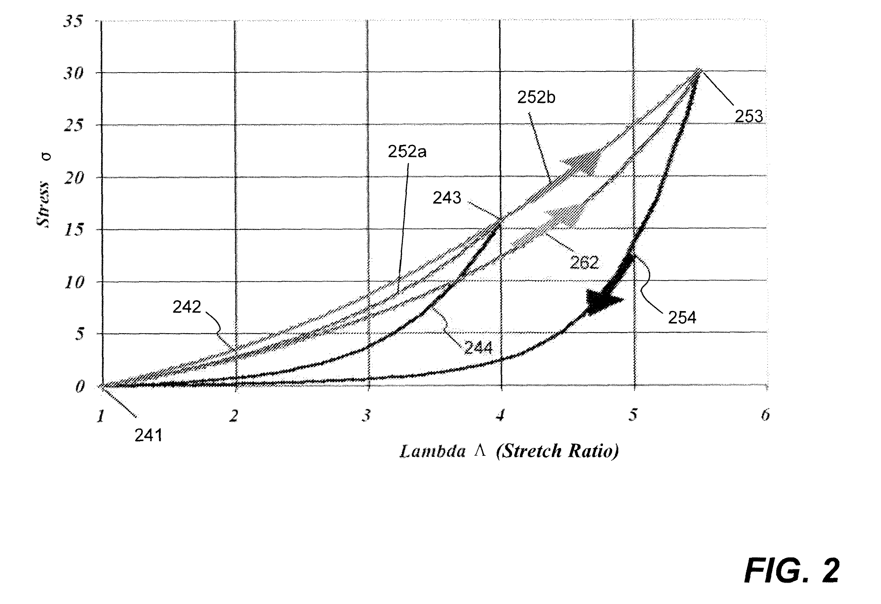

FIG. 2 shows a set of stress-stretch ratio ($\sigma$-$\Lambda$) curves of an exemplary elastic material with softening, or Mullins, effect. The stretch ratio, A, is defined as the stretched length divided by the original length of the material, or, A = $\varepsilon$ + 1, where $\varepsilon$ is the strain. Initially the material is under no loading. The stress $\sigma$ and the stretch ratio A are at origin 241. When a load is applied, the material follows a loading path 242 to a stretched-state of A=4 at 243. When the load is removed, the material follows a first unloading path 244 back to the origin 441. A subsequent reloading follows a different path 252a to stretched-state of A=4 at 243 and a path 252b to reach another stretched-state of A=6 at 253. Unloading at 253 follows a second unloading path 254 to the origin 241. Yet another subsequent reloading follows a new path 262 to reach the stretched state of A = 6 at 253. As each time a maximum stretch ratio is exceeded, the subsequent loading follows a softer path as can be seen from the loading paths 242 and 262, where 262 requires less stress to achieve the same amount of stretching. This softening effect is one of the unique characteristics of polymeric material.

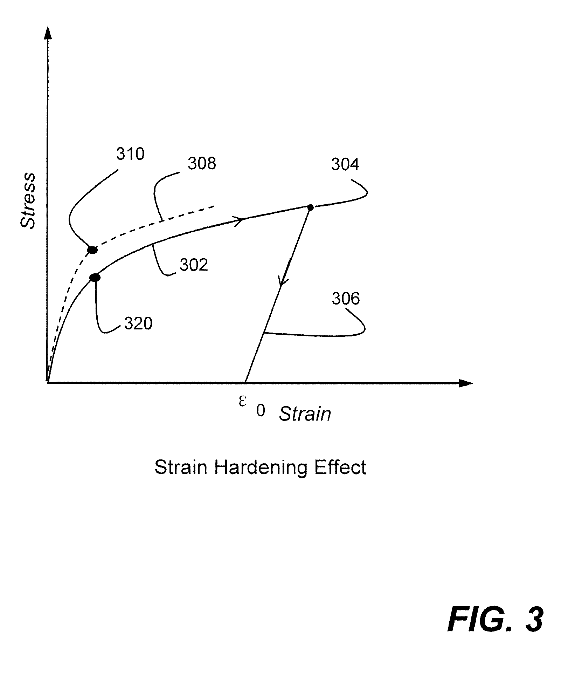

Because of the viscous and the softening effect characteristics, the response of a polymeric material under a load is hard to analyze. When large deformation is involved, the nonlinearity and other plasticity characteristics further significantly increase the difficulties in predicting polymeric material response. One of the characteristics of material under plastic deformation is the hardening effect. FIG. 3 is a diagram showing the stress-strain relationship of strain hardening effect. When a material is subjected to a load, the strain-stress curve follows a trace 302. If the stress state passes the yielding point at 320, the material is under plastic deformation. As the loading stops and is removed at 304, the material follows a trace 306 back to stress-zero state, and left a permanent, or plastic, strain $\varepsilon_0$. In a subsequent loading, the strain response will now follow a different trace 308 which has a yielding point at 310 which is higher than the original yielding point at 320. This increase in the yielding point is generally referred as hardening effect.

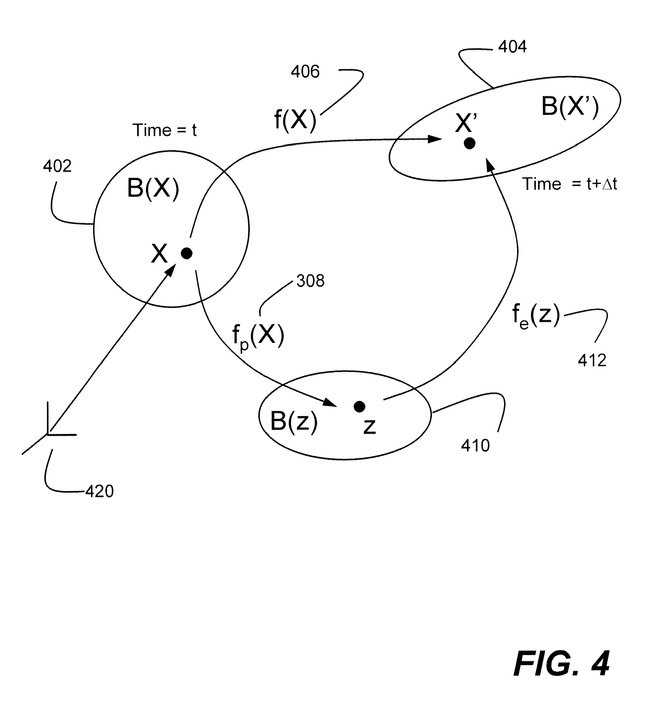

Embodiments of the present invention are discussed herein with reference to FIGS. 4- 6. However, those skilled in the art will readily appreciate that the detailed description given herein with respect to these figures is for explanatory purposes as the invention extends beyond these limited embodiments. In the following detailed description, a dot over a symbol means derivative with respect to time, for example, **F** means d**F**/dt.

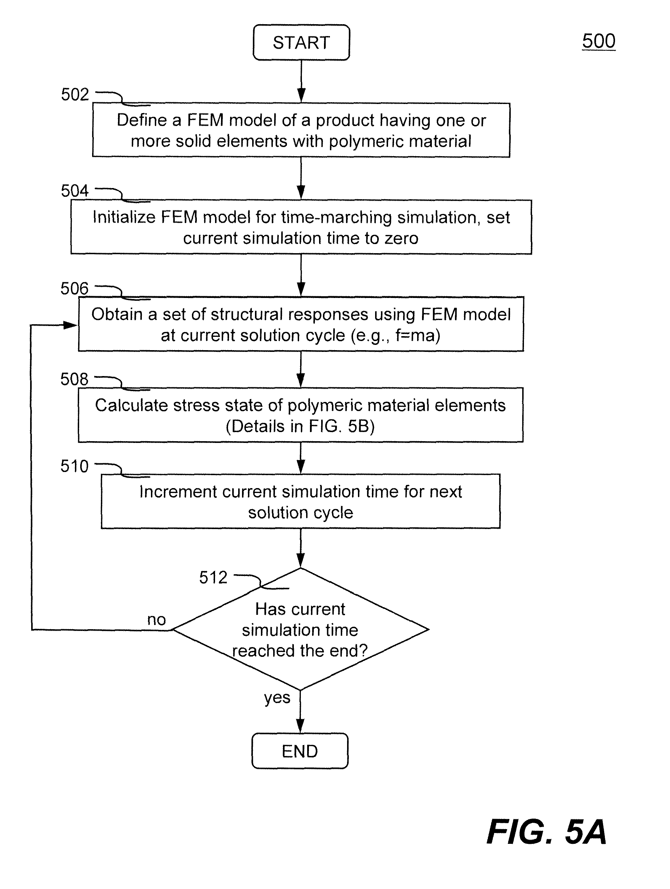

FIG. 5A is a flowchart showing an exemplary process 500 of simulating polymeric material properties according to an embodiment of the present invention. Process 500 is preferably implemented in software.

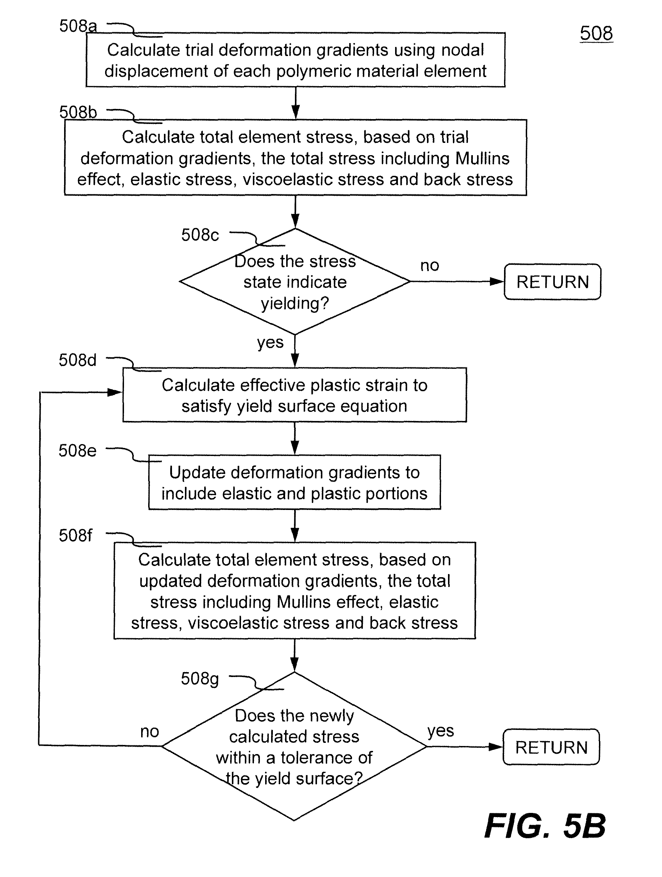

Process 500 starts to define a finite element method (FEM) model of a product at 502. The FEM model comprises one or more solid elements modeled with polymeric material. A time-marching simulation of the product using the FEM model is initialized at 504. For example, the current simulation is initialized to zero. At 506, a set of structural responses is obtained using FEM model at current solution cycle. Stress state of the polymeric material element is calculated at 508 according to one embodiment of the present invention. Details of step 508 are described in FIG. 5B below. Then at 510, the current simulation time is incremented for the next solution cycle. At decision 512, it is determined whether the time-marching simulation has reached a predetermined total simulation time. If not, process 500 moves back to step 506 repeating above steps for another responses until decision 512 becomes true. Process 500 ends thereafter.

FIG. 5B shows details of step 508 for the polymeric material property model. Calculations of stress state start with determining a deformation gradient tensor. Referring to FIG. 4, where a body configuration in motion is shown. A reference body configuration 402 in a coordinate system 420 at time "t" is labeled as **B(X)**, where **X** is a point on the reference body **B(X)**. The motion of the reference body **B(X)** relative to the current configuration at time "t+Δt" is denoted as **f(X)** 406 and the whole body at time t+Δt is labeled as **B(X')** 404. The total deformation gradient from **B(X)** 402 to **B**

**(X')** 404 is the gradient of the motion **f(X)** . That is $\mathbf{F} = \dfrac{\partial \mathbf{f}}{\partial \mathbf{X}}$ . The total motion **f(X)** 406 may be visualized as the result of two consecutive motions: a plastic motion $\mathbf{f_p(X)}$ 408 followed by an elastic motion $\mathbf{f_e(z)}$ 412. The intermediate configuration of the body is denoted as **B(z)** 410. The total motion **f(X)** now can be expressed with these two motions by **f(X)=f_e(fp(X))**, and the total deformation gradient F can be determined from the motions **fp** and **f_e** as

$$\mathbf{F} = \frac{\partial \mathbf{f}}{\partial \mathbf{X}} = \frac{\partial \mathbf{f_e}}{\partial \mathbf{z}} \frac{\partial \mathbf{f_p}}{\partial \mathbf{X}} = \mathbf{F_e F_p} \,. \tag{1}$$

In Equation (1), we define the elastic deformation gradient as

$$\mathbf{F_e} = \frac{\partial \mathbf{f_e}}{\partial \mathbf{z}}, \tag{2}$$

and the plastic deformation gradient as

$$\mathbf{F_p} = \frac{\partial \mathbf{f_p}}{\partial \mathbf{X}}. \tag{3}$$

At 508a, trial deformation gradients using nodal displacement of each polymeric material element are calculated. The total deformation gradient **F** is obtained by solving the differential equation $\mathbf{F} = \mathbf{LF}$, where **L** is the velocity gradient. Based on Equation (1), a trial elastic deformation gradient tensor $\mathbf{F_e}^{n+1}$ is determined by multiplying the total deformation gradient, **F**, with an inverted last-known plastic deformation gradient $\left(\mathbf{F}^{-1}\right)\big/_{\mathbf{p}}^{\mathbf{n}}$ . That is, $\mathbf{F_e}^{n+1} = \mathbf{F}\left(\mathbf{F}^{-1}\right)\big/_{\mathbf{p}}^{\mathbf{n}}$ .

At 508b, based on the trial elastic deformation gradient, the model calculates the total element stress, including Mullins effect (Equation (4)), elastic stress (Equation (5)), viscoelastic stress (Equation (6)) and back stress (Equation (7)).

The softening, or Mullins, effect parameter, $\mathbf{v_s}$, is determined by solving the following rate equation:

$$\dot{v}_s = Z\left(v_{ss} - v_s\right)\frac{\sqrt{N} - 1}{\left(\sqrt{N} - \Lambda_c^{max}\right)^2}\,\dot{\Lambda}_c^{max}, \tag{4}$$

where $Z$ and $N$ are material parameters, $\mathbf{v_{ss}}$ is the saturation value of $\mathbf{v_s}$ , $\Lambda_c^{max}$ is the maximum of the amplified stretch up to the current time. $\Lambda_c = \sqrt{X\left(v_s\right)\left(\bar{\lambda}^2 - 1\right) + 1}$ , where $X(v_s) = 1 + A(1 - v_s) + B(1 - v_s)^2$ , $A$ and $B$ are material

constants, and $\bar{\lambda}^2\left(= I_e/3\right)$ , is one third of the trace of the left Cauchy Green deformation gradient $\mathbf{F_e F_e^{T}}$

With the elastic deformation gradient and softening effect parameter determined, the elastic stresses are given

by:

$$\sigma = \frac{X(v_s)v_s\mu}{3J}\frac{\sqrt{N}}{\Lambda_c}L^{-1}\left(\frac{\Lambda_c}{\sqrt{N}}\right)\left(B_e - \frac{1}{3}I_eI\right) + K(J-1) \tag{5}$$

$$= \sigma_{dev} + \sigma_{vol}$$

where $N$ and $\mu$ are material parameters, $I$ is an identity tensor, $B_e$ is the right Cauchy-Green deformation tensor obtained from the trial elastic deformation gradient $F_e$, ($B_e = F_e^T F_e$), $I_e$ is the first invariant of $B_e$, $K$ is the bulk modulus of the material, $J$ is the determinant of the deformation gradient $F_e$, and $L$ is the Langevin function. The stress tensor $\sigma$ can also be dissolved into two parts: a deviatoric stress tensor, $\sigma_{dev}$, and a volumetric stress tensor, $\sigma_{vol}$.

From the deviatoric stress tensor $\sigma_{dev}$ and the elastic deformation gradient tensor $F_e$, a second Piola Kirchhoff stress $S_{dev}$, defined as $S_{dev} = J F_e^{-1} \sigma_{dev} F_e^{-T}$, can be obtained. Consequently, a viscoelastic stress tensor $Q$ is determined from

$$\dot{Q}_i + \frac{Q_i}{\tau_i} = \beta_i \dot{S}_{dev} , \text{ and } Q = \sum_{i=1}^{6} Q_i \tag{6}$$

where parameters $\tau_i$ and $\beta_i$ describe the viscoelastic properties.

The total stress is then given by $S = S_{dev} + S_{vol} + \sum_{i=1}^{6} Q_i$

where $S_{vol} = J F_e^{-1} \sigma_{vol} F_e^{-T}$

A back stress is defined and calculated as

$$\beta = \frac{\mu}{3J}\frac{\sqrt{N}}{\Lambda_c}L^{-1}\left(\frac{\Lambda_c}{\sqrt{N}}\right)\left(I - \frac{1}{3}I_pC_p^{-1}\right) \tag{7}$$

where $C^{-1}_p$ is the inverse of the plastic right Cauchy-Green deformation tensor ($Cp = F_p^T F_p$) and $I_p$ is the trace of $C_p$. A modified stress tensor is determined by subtracting the back stress from the total stress $S = S - \beta$, and subsequently, the Cauchy stress is then given by applying a standard push forward operation on the modified stress tensor $S^*$. That is,

$$\sigma = \frac{1}{J_e}F_e S^* F_e^T , \tag{8}$$

where $F_e$ is the elastic part of the deformation gradient and $J_e = det F_e$.
An effective stress tensor, $\sigma_{eff}$, is then calculated from the modified elastic stress tensors $\sigma$ in Equation (8) as :

$$\sigma^2_{eff} = F(\sigma_{22} - \sigma_{33})^2 + G(\sigma_{33} - \sigma_{11})^2 + H(\sigma_{11} - \sigma_{22})^2$$

$$+ 2L\sigma^2_{12} + 2M\sigma^2_{23} + 2N\sigma^2_{13}$$

where $F$, $G$, $H$, $L$, $M$, $N$ are plastic material parameters.
The viscoelastic stress contributing to material hardening is incorporated into the following equation: $\sigma_{yld} =$

$$\sigma_{yld\,0} + \sum_{i=1}^{4} W_i \left( 1 - e^{\beta_i \bar{\varepsilon}} \right)$$ where $\sigma_{yld\,0}$ is the initial yield stress. The hardening is defined by parameters, $W_i$ and $\beta_i$

($i$=1,2,..4). Alternatively, the hardening effect can also be described by a general load curve $\sigma_{yld} = g(\bar{\varepsilon})$, where $\bar{\varepsilon}$ is the effective plastic strain.

A yield surface, $f$, combining the modified elastic stresses, the viscoelastic stresses and a viscoplastic strain rate, $\dot{\bar{\varepsilon}}$, is then defined as

$$f = \sigma_{eff} - \sigma_{yld} - D\dot{\bar{\varepsilon}}^E \qquad (9)$$

where $D$ and $E$ are viscoplastic parameters.

At 508c, the stress state is checked against the yield surface, $f$, If $f < 0$, there is no yielding. There is no large deformation presents in the current simulation time step. The process returns to the FEM time-marching simulation loop. If $f > 0$, yielding occurs, the simulation follows a "yes" path to step 580d.

At 580d, the effective plastic strain is calculated by satisfying the yield surface equation (9). That is, by solving the equation of $f = 0$. The effective plastic strain $\bar{\varepsilon}$ so determined is then used to update the plastic deformation gradient tensor at 508e according to the following equation:

$$F_p^{k+1} = F_p^k + \Delta t \frac{\sigma_{dev}}{|\sigma_{dev}|} \dot{\bar{\varepsilon}} \qquad (10)$$

where $F_p^{k+1}$ and $F_p^k$ are the updated and the current plastic deformation gradient tensors respectively, $\sigma_{dev}$ is the deviatoric part of the modified elastic stress tensor $\sigma$, and $\Delta t$ is the time increment in the simulation.

Based on the updated plastic deformation gradient tensor $F_p^{k+1}$ at 508f, the Mullins effect parameter $v_s$ and the element stress state are recalculated using the same equations as those in 508b. Subsequently, at 508g, the recalculated element stress state is checked. If the yield surface function, $f$, under the stress state is within a tolerance of the yield surface, the complete response solution of the element is determined, then the process returns to the main FEM time-marching loop. Otherwise, the process continues by looping back to step 508d.

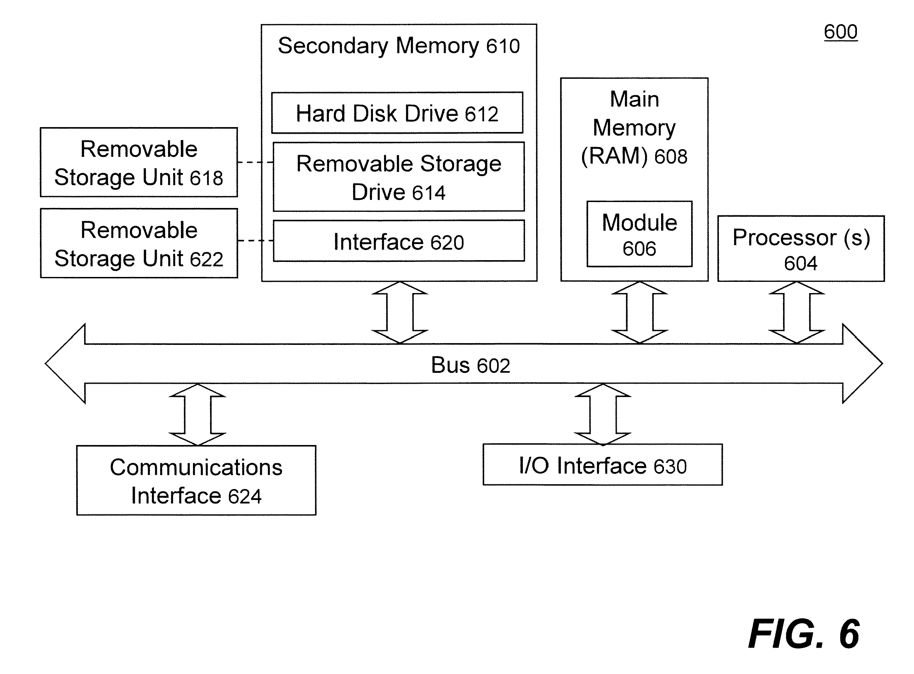

According to one embodiment, the present invention is directed towards one or more computer systems capable of carrying out the functionality described herein. An example of a computer system 600 is shown in FIG. 6. The computer system 600 includes one or more processors, such as processor 604. The processor 604 is connected to a computer system internal communication bus 602. Various software embodiments are described in terms of this exemplary computer system. After reading this description, it will become apparent to a person skilled in the relevant art(s) how to implement the invention using other computer systems and/or computer architectures.

Computer system 600 also includes a main memory 608, preferably random access memory (RAM), and may also include a secondary memory 610. The secondary memory 610 may include, for example, one or more hard disk drives 612 and/or one or more removable storage drives 614, representing a floppy disk drive, a magnetic tape drive, an optical disk drive, etc. The removable storage drive 614 reads from and/or writes to a removable storage unit 618 in a well-known manner. Removable storage unit 618, represents a floppy disk, magnetic tape, optical disk, etc. which is read by and written to by removable storage drive 614. As will be appreciated, the removable storage unit 618 includes a computer usable storage medium having stored therein computer software and/or data.

In alternative embodiments, secondary memory 610 may include other similar means for allowing computer programs or other instructions to be loaded into computer system 600. Such means may include, for example, a removable storage unit 622 and an interface 620. Examples of such may include a program cartridge and cartridge interface (such as that found in video game devices), a removable memory chip (such as an Erasable Programmable Read-Only Memory (EPROM), Universal Serial Bus (USB) flash memory, or PROM) and associated socket, and other removable storage units 622 and interfaces 620 which allow software and data to be transferred from the removable storage unit 622 to computer system 600. In general, Computer system 600 is controlled and coordinated by operating system (OS) software, which performs tasks such as process scheduling, memory management, networking and I/O services.

There may also be a communications interface 624 connecting to the bus 602. Communications interface 624 allows software and data to be transferred between computer system 600 and external devices. Examples of communications interface 624 may include a modem, a network interface (such as an Ethernet card), a communication port, a Personal Computer Memory Card International Association (PCMCIA) slot and card, etc. Software and data transferred via communications interface 624. The computer 600 communicates with other computing devices over a data network based on a special set of rules (i.e., a protocol). One of the common protocols is TCP/IP (Transmission Control Protocol/ Internet Protocol) commonly used in the Internet. In general, the communication interface 624 manages the assembling of a data file into smaller packets that are transmitted over the data network or reassembles received packets into the original data file. In addition, the communication interface 624 handles the address part of each packet so that it gets to the right destination or intercepts packets destined for the computer 600.In this document, the terms "computer program medium", "computer readable medium", "computer recordable medium" and "computer usable medium" are used to generally refer to media such as removable storage drive 614 (e.g., flash storage drive), and/or a hard disk installed in hard disk drive 612. These computer program products are means for providing software to computer system 200. The invention is directed to such computer program products.

The computer system 600 may also include an input/output (I/O) interface 630, which provides the computer system 600 to access monitor, keyboard, mouse, printer, scanner, plotter, and alike.

Computer programs (also called computer control logic) are stored as application modules 606 in main memory 608 and/or secondary memory 610. Computer programs may also be received via communications interface 624. Such computer programs, when executed, enable the computer system 600 to perform the features of the present invention as discussed herein. In particular, the computer programs, when executed, enable the processor 604 to perform features of the present invention. Accordingly, such computer programs represent controllers of the computer system 600.

In an embodiment where the invention is implemented using software, the software may be stored in a computer program product and loaded into computer system 600 using removable storage drive 614, hard drive 612, or communications interface 624. The application module 206, when executed by the processor 604, causes the processor 604 to perform the functions of the invention as described herein.

The main memory 608 may be loaded with one or more application modules 606 that can be executed by one or more processors 604 with or without a user input through the I/O interface 630 to achieve desired tasks. In operation, when at least one processor 604 executes one of the application modules 606, the results are computed and stored in the secondary memory 610 (i.e., hard disk drive 612). The status of the analysis (e.g., stress state of polymeric material) is reported to the user via the I/O interface 630 either in a text or in a graphical representation upon user's instructions.

Although the present invention has been described with reference to specific embodiments thereof, these embodiments are merely illustrative, and not restrictive of, the present invention. Various modifications or changes to the specifically disclosed exemplary embodiments will be suggested to persons skilled in the art. For example, whereas the polymeric material model has been shown and described as a group of equations (Equations (1)-(10)), other equivalent mathematical descriptions of material behaviors can be used instead. In summary, the scope of the invention should not be restricted to the specific exemplary embodiments disclosed herein, and all modifications that are readily suggested to those of ordinary skill in the art should be included within the spirit and purview of this application and scope of the appended claims.

**Claims**

1. A method executed in a computer system for simulating material properties of polymeric material comprising:

   defining, by an application module installed in a computer system, a finite element analysis (FEA) model of a product, the FEA model including a plurality of solid elements representing a polymeric material, the polymeric material having a yield surface defining elastic-plastic boundary;
   obtaining, by said application module, a set of structural responses of the FEA model using FEA in a time-marching simulation of the product under loads, the time-marching simulation containing a plurality of solution cycles,
   calculating, by said application module, a stress state of the solid elements based on deformation gradient tensors that includes elastic stress, viscoelastic stress, back stress and softening effect;
   iteratively updating, by said application module, the stress state to include viscoplastic deformation effect when the calculated stress state is determined to be outside of the yield surface, wherein the updated stress state is used for another set of structural responses in next solution cycle; and
   wherein the stress state of the solid elements is saved into a file on a storage device coupled to the computer system upon user's instructions.

2. The method of claim 1, wherein the stress state further includes strain hardening effect.

**3.** The method of claim 1, wherein the softening effect comprises Mullin's effect.

**4.** The method of claim 1, said iteratively updating the stress state further comprises determining, by said application module, convergence of said iteratively updating using a predetermined tolerance with respect to the yield surface.

**5.** The method of claim 1, said iteratively updating the stress state further comprises updating, by said application module, the yield surface in response to the viscoplastic deformation.

**6.** A system for simulating material properties of polymeric material comprising:

a memory for storing computer readable code for one or more finite element analysis (FEA) modules;
at least one processor coupled to the memory, said at least one processor executing the computer readable code in the memory to cause the one or more FEA modules to perform operations of:
defining a finite element analysis (FEA) model of a product, the FEA model including a plurality of solid elements representing a polymeric material, the polymeric material having a yield surface defining elastic-plastic boundary;
obtaining a set of structural responses of the FEA model using FEA in a time-marching simulation of the product under loads, the time-marching simulation containing a plurality of solution cycles,
calculating a stress state of the solid elements based on deformation gradient tensors that includes elastic stress, viscoelastic stress, back stress and softening effect;
iteratively updating the stress state to include viscoplastic deforamtion effect when the calculated stress state is determined to be outside of the yield surface, wherein the updated stress state is used for another set of structural responses in next solution cycle; and
wherein the stress state of the solid elements is saved into a file on a storage device coupled to the system upon user's instructions.

**7.** The system of claim 6, said iteratively updating the stress state further comprises determining convergence of said iteratively updating using a predetermined tolerance with respect to the yield surface.

**8.** The system of claim 6, said iteratively updating the stress state further comprises updating the yield surface in response to the viscoplastic deformation.

**9.** A computer readable medium containing computer executable instructions for simulating material properties of polymeric material by a method according to claim 1.

Strain relaxation (creep) under constant stress

## FIG. 1A

Stress relaxation under constant strain

## FIG. 1B

FIG. 2

Strain Hardening Effect

FIG. 3

FIG. 4

500

```
                    ┌─────────────┐
                    │    START    │
                    └──────┬──────┘
                           │
502 ──┐                    ▼
    ┌──────────────────────────────────────────────┐
    │  Define a FEM model of a product having one or │
    │  more solid elements with polymeric material   │
    └──────────────────────────────────────────────┘
                           │
504 ──┐                    ▼
    ┌──────────────────────────────────────────────┐
    │  Initialize FEM model for time-marching        │
    │  simulation, set current simulation time to zero│
    └──────────────────────────────────────────────┘
                           │
506 ──┐                    ▼
    ┌──────────────────────────────────────────────┐
    │  Obtain a set of structural responses using    │
    │  FEM model at current solution cycle (e.g., f=ma)│
    └──────────────────────────────────────────────┘
                           │
508 ──┐                    ▼
    ┌──────────────────────────────────────────────┐
    │  Calculate stress state of polymeric material  │
    │  elements (Details in FIG. 5B)                 │
    └──────────────────────────────────────────────┘
                           │
510 ──┐                    ▼
    ┌──────────────────────────────────────────────┐
    │  Increment current simulation time for next    │
    │  solution cycle                                │
    └──────────────────────────────────────────────┘
                           │
512 ──┐                    ▼
              ◇ Has current simulation time
        no    reached the end?
                           │ yes
                           ▼
                    ┌─────────────┐
                    │     END     │
                    └─────────────┘
```

*FIG. 5A*

508

508a — Calculate trial deformation gradients using nodal displacement of each polymeric material element

508b — Calculate total element stress, based on trial deformation gradients, the total stress including Mullins effect, elastic stress, viscoelastic stress and back stress

508c — Does the stress state indicate yielding?

no → RETURN

yes

508d — Calculate effective plastic strain to satisfy yield surface equation

508e — Update deformation gradients to include elastic and plastic portions

508f — Calculate total element stress, based on updated deformation gradients, the total stress including Mullins effect, elastic stress, viscoelastic stress and back stress

508g — Does the newly calculated stress within a tolerance of the yield surface?

no

yes → RETURN

*FIG. 5B*

Secondary Memory 610

Hard Disk Drive 612

Removable Storage Unit 618

Removable Storage Drive 614

Removable Storage Unit 622

Interface 620

Main Memory (RAM) 608

Module 606

Processor (s) 604

Bus 602

Communications Interface 624

I/O Interface 630

**FIG. 6**

EP 2 388 722 A2